# EUROPÄISCHE PATENTANMELDUNG

(11) **EP 0 549 950 A1**
(43) Veröffentlichungstag der Anmeldung: **07.07.1993**
(21) Anmeldenummer: 92121354.2
(22) Anmeldetag: 16.12.1992
(51) Int. Cl.: H01M 2/34, H01M 10/48, H02J 7/00, G01R 31/00

(54) **Einrichtung zum Sperren gegen Einlegen von Akkumulatoren, die sich nicht in bestimmungsgemässen Ladezuständen befinden, in elektrische Verbraucher-Geräte und/oder Ladergeräte**

(30) Priorität: 21.12.1991 DE 4142677
(71) Anmelder: GRUNDIG E.M.V. Elektro-Mechanische Versuchsanstalt Max Grundig holländ. Stiftung & Co. KG., D-90762 Fürth (DE)
(72) Erfinder: Bratenstein, Ernst, Grundig E.M.V., Max Grundig, W-8510 Fürth/Bay (DE)

(57) **Zusammenfassung**

Zum Betrieb von elektrischen Geräten mit veränderlichen Einsatzorten, wie Filmkameras, Videokameras, tragbaren Rundfunk- und Fernsehgeräten, Messgeräten usw. hier kurz Verbrauchergeräte (VG) genannt, werden meistens wiederaufladbare NiCd-Akkus eingesetzt. Dabei kann es, vornehmlich im Feldbetrieb, zu Ärgernissen kommen, wenn der Energievorrat nicht ausreicht. Dies kann nur dadurch vermieden werden, daß die Akkus immer mit richtiger Ladung in das VG eingesetzt werden. Bei den NiCd-Akkus kommt außerdem noch dazu, daß beim Wiederaufladen, wenn nicht immer ein voller Entlade-Ladezyklus erfolgt, ein sogenannter Memory-Effekt auftritt, der die Kapazität des Akkus reduziert.

Es wird eine Einrichtung beschrieben, die für die Einsätze der Akkus in das VG bzw. in das Ladegerät (LG) die vollen Entlade- und Ladezyklen gewährleistet. Damit fällt für den Benutzer eine sonst notwendige buchführende Überwachung der Ladezustände seiner Akkus weg.

## Beschreibung

Die Erfindung betrifft eine Einrichtung zum Sperren gegen Einlegen von Akkumulatoren, die sich nicht in bestimmungsgemäßen Ladezuständen befinden, in elektrische Verbraucher-Geräte und/oder Ladegeräte gemäß dem Oberbegriff des Anspruchs 1.

Zum Betrieb von elektrischen Geräten mit veränderlichen Einsatzorten, wie Filmkameras, Videokameras, tragbaren Rundfunk- und Fernsehgeräten, Messgeräten usw., hier kurz Verbraucher-Geräte (VG) genannt, werden meistens wiederaufladbare NiCd-Akkus eingesetzt. In den wenigsten Fällen werden auch sogenannte Batteriepacks verwendet. Bei Verwendung beider Energiequellen kommt es, vornehmlich im Feldbetrieb, zu Ärgernissen, wenn der Energievorrat nicht ausreicht. Speziell beim Einsatz von NiCd-Akkus tritt darüber hinaus noch ein zweiter gravierender Nachteil auf, nämlich der sogenannte Memory-Effekt, welcher dazu führt, daß die volle Kapazität des Akkus nicht mehr zur Verfügung steht, also nicht mehr nutzbar ist. Zu vermeiden ist der Memory-Effekt nur, wenn die Akkus immer einen vollen Lade- und Entladezyklus durchmachen. Das bedeutet, daß sie immer vor dem Einsatz in das VG voll geladen und vor dem Laden im Ladegerät (LG) immer erst vollständig entladen werden müssen. Dies jedoch zu realisieren, erfordert fast schon eine buchführende Maßnahme wie Zeiterfassung, Betriebsstundennachweis, usw. Das wiederum macht den Betrieb der Geräte benutzerunfreundlich, weil der Benutzer eine zu große Aufmerksamkeit der Spannungsversorgung seines Gerätes widmen muß.

Aufgabe der Erfindung ist es daher, die Spannungsversorgung von Geräten mit veränderlichen Einsatzorten so zu gestalten, daß sich eine in Bezug auf die bestimmungsgemäßen Ladezustände der Energiequellen richtige und einfache Benutzung der Energiequellen ergibt.

Diese Aufgabe wird durch die im Anspruch 1 angegebenen Merkmale gelöst. Die erfindungsgemäße Einrichtung weist den Vorteil auf, daß durch Mitbenutzung ohnehin in elektrischen Geräten oder Ladegeräten vorhandener Komponenten, wie Steuereinrichtung, Messeinrichtung, Anzeigeeinrichtung und elektromechanische Sperren, zuverlässig das Einlegen von Akkumulatoren, die sich nicht in bestimmungsgemäßen Ladezuständen befinden, verhindert wird. Dabei wird der zusätzliche Schaltungsaufwand von der programmtechnischen Lösung der Steuereinrichtung bestimmt.

Die zur Realisierung der Einrichtung benötigten Einzelkomponenten sind größtenteils bekannt. Erst durch die erfindungsgemäße Kombination dieser Komponenten kommt die gewünschte Einrichtung zustande.

Aus DD 251440 ist ein Energieversorgungssystem für batteriebetriebene Geräte bekannt. Dieses Energieversorgungssystem soll eine maximale Verfügbarkeit an Energie von einem Akku und gleichzeitige optimale Wartung des Akkus gewährleisten. Die Einrichtung des Energieversorgungssystems besteht aus zwei Einheiten und zwar aus einer Batteriekassette mit Sekundärelementen (Akkus), einem Informationsspeicher und einem Sensor, sowie einem Verbraucher mit einer Verarbeitungseinheit, einem Taktgeber, einem Sensor-Interface und einem Informationsspeicher-Interface. Diese beiden Einheiten sind zweckmäßig miteinander verbunden, so daß der Energieverbrauch entsprechend einem Programm ausgewertet und im Informationsspeicher des Akkus abgelegt werden kann.

Der Sinn dieser Einrichtung besteht darin, daß ständige Aussagen über die verfügbare Energiemenge und den Ladezustand der Akkus möglich sind. Bei bekanntem Ladezustand braucht beim Laden nur die fehlende Energiemenge ergänzt werden, was die Ladezeit bedeutend verkürzt. Bei dieser Erfindung handelt es sich um eine sehr aufwendige Einrichtung, um den Energieverbrauch eines Verbrauchers festzustellen und dadurch geringe Ladezeiten zu erreichen. Außerdem kann, da es sich bei diesem Energieversorgungssystem nicht um den Einsatz von NiCd-Akkus handelt, kein Memory-Effect auftreten.

In dem DE-GM 90 13 562.8 wird ein Instrument zur Anzeige des Entladezustands von Akkumulatoren offenbart. Das Instrument weist in seinem Anzeigefeld einen LCD-Baustein auf, der über eine mit Lumineszenz-Flüssigkeit gefüllte und getrennte elektrische Anschlüsse aufweisende Kammer oder Zelle verfügt. Dieser LCD-Baustein wird in diesem Fall so angesteuert, daß in analoger Darstellung die Lademenge und der Verlauf des Ladungszustandes von Akkus angezeigt werden.

So ist beispielsweise aus EP-A2-0423484 ein Verfahren zur Bestimmung des Zustandes eines Akkumulators bekannt. Dabei wird nach Anschließen eines Akkus an das Ladegerät erst die Restlademenge gemessen und der Akku bei Bedarf entladen, bevor der Ladevorgang beginnt.

Gegenüber dem bekannten Stand der Technik erfüllt die vorliegende Erfindung die Aufgabe, das Einlegen von in nicht bestimmungsgemäßen Ladezuständen sich befindliche Akkus zu verhindern. Für den Verbraucher ist es damit nicht möglich, Akkus mit irgendwelchen Ladungszuständen in Geräte einzulegen, in denen sie eine nichtgewünschte Behandlung erfahren.

Ladeanzeigen auf optischem oder akustischem Weg mit und ohne Warnung bei Erreichen der Restkapazität des Akkus sind von vielen VG her bekannt. Genannt seien hier nur tragbare Audiogeräte, Diktiergeräte, Fotoapparate, tragbare Kameras, Rasierapparate usw. Elektromechanische Sperren sind als magnetisch betätigte Sperrklinken in der Mechanik hinlänglich bekannt. In Kombination mit einer Messeinrichtung, die die Stromflußrichtung feststellt, können die betriebsrichtigen Sperr- oder Freigabestellungen erreicht werden. Diese Sperren können sowohl an den Geräten (LG oder VG) als auch am Akku selbst angebracht sein. Die Entscheidung, welche Komponenten bei der Realisierung der erfindungsgemäßen Einrichtung Verwendung finden, wird der Konstrukteur nicht zuletzt unter wirtschaftlichen Gesichtspunkten treffen.

Die Einrichtung erlaubt selbstverständlich auch den Einsatz von Batterie-Packs in den VG. Die geräteseitige Anzeige der Ladung ist auch hierbei möglich. Der Einsatz von Batterie-Packs im LG kann durch bauliche Gegebenheiten des Batterie-Packs leicht vermieden werden.

Die Erfindung wird anhand der nachfolgenden Abbildungen näher erläutert.

Er zeigen:
- Fig. 1: Die Symbole der Ladezustände der Akkus bzw. der Batterien,
- Fig. 2: die weiteren verwendeten Symbole,
- Fig. 3: die erlaubten und nicht erlaubten Einsätze von vollen Energieträgern,
- Fig. 4: die erlaubten und nicht erlaubten Einsätze von leeren Energieträgern,
- Fig. 5 + Fig. 6: die erlaubten und nicht erlaubten Einsätze von teilvollen und teilleeren Energieträgern,
- Fig. 7: ein Ausführungsbeispiel einer Display-Anzeige im Akku.

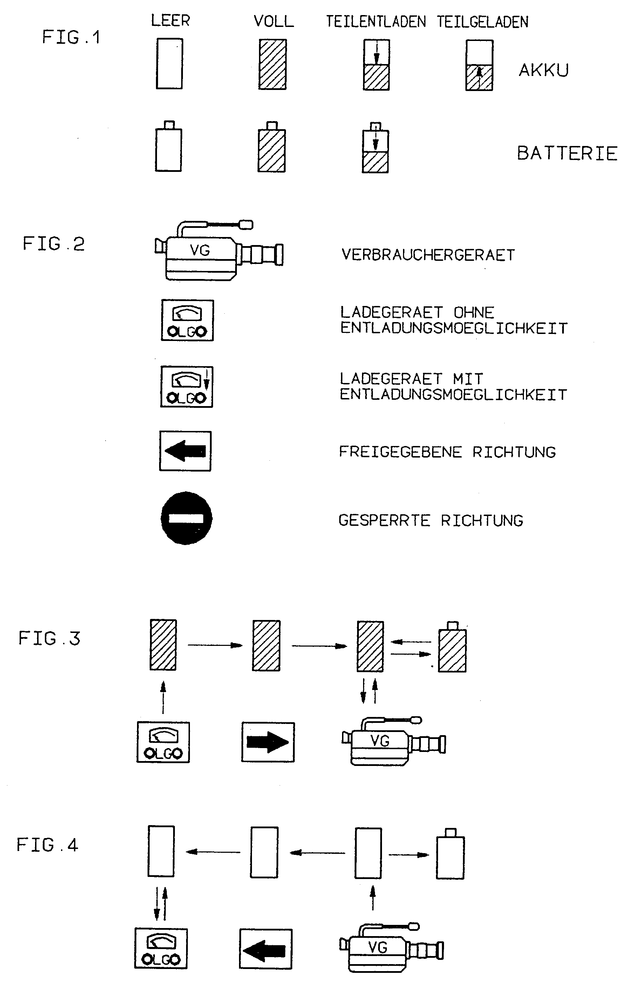

Die Symbole für die einzelnen Ladezustände der Energieträger (Akkus oder Batterien) sind in Fig. 1 dargestellt. Die vorhandene bzw. teilweise bzw. fehlende Schraffur zeigt in Verbindung mit dem Pfeil die Ladung und die Richtung des Stromflusses, d.h. ob entladen oder geladen, an.

In Fig. 2 sind die weiteren verwendeten Symbole aufgezeigt. Das Verbrauchergerät (VG) ist schematisch als Kamera dargestellt. Beim Ladegerät(LG)-Symbol ist zu unterscheiden zwischen Nur-Ladegerät (ohne Pfeil) und Ladegerät mit vorheriger bedarfsweiser Entladung (mit Pfeil) des Akkus. Die freigegebene und die gesperrte Richtung stellen die beiden letzten Symbole dar.

Die Fig. 3 zeigt auf, daß ein voller Akku nur in ein VG eingelegt werden kann. Dasselbe gilt auch für eine volle Batterie bzw. einen Batterie-Pack. Die erlaubte Richtung für den Akku geht nur vom LG zum VG. Einsetzen und entnehmen des Akkus bzw. der Batterie in das und aus dem VG ist erlaubt.

Analog dazu zeigt die Fig. 4 den erlaubten Weg von leeren Energieträgern. Eine leere Batterie kann nur aus dem VG entnommen werden. Wird sie trotzdem wieder eingesetzt, muß die Warnung vom VG her aktiv werden, entweder akustisch oder optisch. Denkbar ist auch eine mechanische Sperre, die den Einsatz der Batterie unmöglich macht, wenn die Mindestkapazität der Batterie unterschritten ist. Die Messung der Mindestkapazität könnte während des versuchten Einlegens der Batterie in das VG erfolgen. Es könnte eine Sperre sein, die nur beim Vorhandensein einer zum Betrieb des VG ausreichenden Mindestkapazität mittels eines Elektromagneten zur Freigabe weggeschwenkt wird. Außer der mechanischen Sperre kann selbstverständlich auch eine elektronische Sperre oder elektronische Sperrung eingesetzt werden. Dieselbe Sperre verhindert auch den Einsatz eines leeren Akkus in das VG. Eine analoge Sperre, die verhindert, daß ein voller Akku in das LG eingesetzt wird, könnte Bestandteil des LG sein. Ein leerer Akku kann nur in das LG eingesetzt werden. Die Ladezustandsanzeige ist zweckmäßigerweise am Akku selbst angebracht.

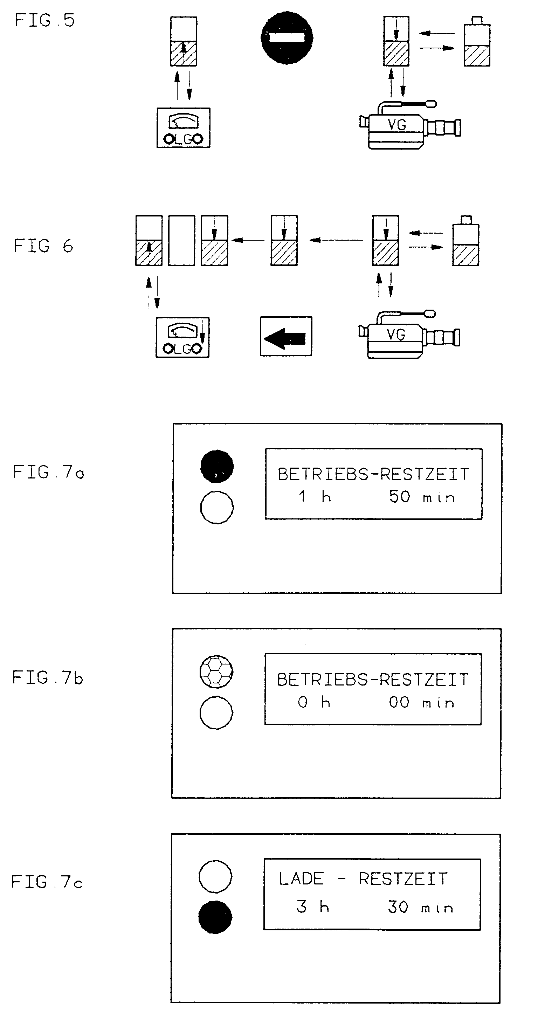

In Fig. 5 sind die erlaubten Einsätze von teilgeladenen bzw. teilentladenen Akkus dargestellt. Der Austausch von Energieträgern zwischen LG und VG ist nicht erlaubt, wie das Sperrzeichen verdeutlicht. Ein teilweise geladener Akku kann nur wieder in das LG eingelegt werden. Ebenso kann ein teilweise entladener Akku nur wieder in das VG eingesetzt werden.

Anders sieht es nach den in Fig. 6 gezeigten Einsatzmöglichkeiten aus. Hier wird ebenfalls der erlaubte und unerlaubte Einsatz von teilgeladenen bzw. teilentladenen Akkus dargestellt. Unterschiedlich zu Fig. 5 ist nur, daß ein LG eingesetzt wird, das vor der Ladung des Akkus erst die noch vorhandene Ladungsmenge mißt und den Akku bedarfsweise entlädt. Erst nach der Entladung beginnt der Ladevorgang.

In den Fig. 7a bis 7c ist ein Ausführungsbeispiel einer Display-Anzeige, kombiniert mit LED-Anzeigen in einem Akku aufgezeigt.

Die Fig. 7a zeigt die Einsatzfähigkeit eines Akkus in ein VG. Die Zeitangabe gibt die Betriebsrestzeit wieder, die obere LED leuchtet. Der Zähler arbeitet subtrahierend.

In Fig. 7b ist der Leerzustand des Akkus erreicht. Das Display zeigt eine Betriebs-Restzeit von 0 h 00 min an, die obere LED blinkt. Der Akku darf nicht wieder in das VG eingesetzt werden.

Schließlich veranschaulicht Fig. 7c den Anzeigezustand des Displays, wenn ein leerer Akku in ein LG eingelegt ist und geladen wird. Die Anzeige gibt die Lade-Restzeit wieder. Die untere LED leuchtet. Der Zähler arbeitet subtrahierend. Die Lade-Restzeit bewegt sich auf Null zu. Die Anzeige bleibt auch erhalten, wenn während des Ladevorgangs der Akku aus dem LG entnommen wird. Er kann dann aber jederzeit wieder in das LG eingesetzt werden. Erst wenn der Akku voll geladen ist, geht er wieder in einen Anzeigezustand analog Fig. 7a.

Die Figuren 3 bis 6 sollen nur veranschaulichen, welche Einsätze der Energieträger in Abhängigkeit ihrer Ladung erlaubt und nicht erlaubt sind. Die Realisierungsmöglichkeiten sind vielfältig und unterliegen mehreren Einflüssen, wie Platzbedarf und Kosten und sind deshalb nach Entscheidung des Konstrukteurs auszuwählen.

## Patentansprüche

1. Einrichtung zum Sperren gegen Einlegen von Akkumulatoren, die sich nicht in bestimmungsgemäßen Ladezuständen befinden, in elektrische Verbrauchergeräte und/oder Ladegeräte, welche eine Steuereinrichtung aufweisen, die den Ladezustand durch Strommessung, Spannungsmessung oder dgl. ermittelt, das Messergebnis optisch und/oder akustisch anzeigt und welche unter Verwendung von elektromechanischen Sperren, insbesondere magnetisch betätigbaren Sperrklinken, das Einlegen verhindert, wobei die elektromechanischen Sperren am Verbrauchergerät, am Ladegerät und/oder am Akku sein können,
**gekennzeichnet** durch folgende Merkmale:
Die Steuereinrichtung ist derart ausgestaltet, daß
- ein teilgeladener Akku nur wieder in das Ladegerät eingelegt werden kann,
- ein teilentladener Akku nur wieder in das Verbrauchergerät eingesetzt werden kann,
- ein teilentladener Akku nur wieder in das Ladegerät eingesetzt werden kann, wenn dieses über eine Einrichtung verfügt, die vor dem Ladevorgang den Ladezustand des Akkus feststellt und den Akku vollkommen entlädt,
- der Einsatz eines Batterie-Packs in ein Ladegerät verhindert wird.

2. Einrichtung nach Anspruch 1,
**dadurch gekennzeichnet**, daß die Steuereinrichtung derart ausgestaltet ist, daß
- der Einsatz eines vollgeladenen Akkus in ein Ladegerät
und/oder
- der Einsatz eines leeren Akkus in ein Verbrauchergerät
verhindert wird.

3. Einrichtung nach Anspruch 1 und 2,
**dadurch gekennzeichnet**, daß der Akku eine Ladungsbestimmungs-Einrichtung beinhaltet, die bei Entnahme des Akkus aus dem Verbrauchergerät oder Ladegerät automatisch die Ladung mißt und automatisch oder durch eine Tastenbetätigung den Ladezustand anzeigt.

4. Einrichtung nach Anspruch 3,
**dadurch gekennzeichnet**, daß die Ladungsanzeige über ein Display und/oder LED's erfolgt, wobei das Display in Abhängigkeit von der Stromflußrichtung die geladene Ladungsmenge oder die Restladung anzeigt.

5. Einrichtung nach Anspruch 4,
**dadurch gekennzeichnet**, daß beim Entnehmen des Akkus aus dem Verbrauchergerät die Restladung und beim Entnehmen aus dem Ladegerät die noch zu ladende bzw. schon geladene Lademenge angezeigt wird.

6. Einrichtung nach Anspruch 5,
**dadurch gekennzeichnet**, daß die Anzeige der Lademenge des Akkus bei Entnahme aus dem Ladegerät wahlweise als noch zu ladende oder als schon geladene Ladungsmenge erfolgt.

7. Einrichtung nach den Ansprüchen 5 und 6,
**dadurch gekennzeichnet**, daß die Anzeige als Zeitanzeige im Display erfolgt.

8. Einrichtung nach einem oder mehreren der Ansprüche 1 bis 6,
**dadurch gekennzeichnet**, daß der Akku eine elektromechanische Einrichtung mit mechanischen Sperren oder eine elektronische Sperre besitzt, welche, dem Ladezustand des Akkus entsprechend, den Einsatz des Akkus in das Verbrauchergerät oder in das Ladegerät sperren.

9. Einrichtung nach Anspruch 1 und 2,
**dadurch gekennzeichnet**, daß das Verbrauchergerät eine akustische oder optische Signaleinrichtung besitzt, die kurz vor dem Erreichen des entladenen Zustands des Akkus aktiv wird.

10. Einrichtung nach einem oder mehreren der Ansprüche 1 bis 9,
**dadurch gekennzeichnet**, daß das Verbrauchergerät eine Messeinrichtung zur Anzeige der Restkapazität des Akkus oder der Batterie besitzt.

11. Einrichtung nach einem oder mehreren der Ansprüche 1 bis 10,
**dadurch gekennzeichnet**, daß das Verbrauchergerät eine elektromechanische Sperre enthält, die aktiv wird, wenn ein leerer Akku oder eine leere Batterie eingesetzt werden soll.
